(19) Europäisches Patentamt
European Patent Office
Office européen des brevets

(11) Publication number: **0 020 138 B1**

(12) # EUROPEAN PATENT SPECIFICATION

(45) Date of publication of patent specification: **22.06.83**

(21) Application number: **80301770.6**

(22) Date of filing: **28.05.80**

(51) Int. Cl.³: **C 07 C 119/06, C 08 K 5/29, C 09 K 15/18, C 10 M 3/28**

(54) **N-(2-amino-3-ethyl-alpha-methylbenzylidene)-2,6-diethylaniline and its preparation; antioxidant additive mixtures including said compound; the use of said compound, said additive mixtures and certain alkylated anilines as antioxidants for organic materials; and organic materials afforded antioxidant protection as aforesaid.**

(30) Priority: **29.05.79 US 42970**

(43) Date of publication of application:
**10.12.80 Bulletin 80/25**

(45) Publication of the grant of the patent:
**22.06.83 Bulletin 83/25**

(84) Designated Contracting States:
**BE CH DE FR GB IT LI LU NL**

(56) References cited:
**US - A - 3 982 044**

(73) Proprietor: **ETHYL CORPORATION**
**330 South Fourth Street P.O. Box 2189**
**Richmond Virginia 23219 (US)**

(72) Inventor: **Bartleson, John David**
**27267 W. 14 Mile Road, Box 137**
**Franklin, Michigan 48025 (US)**
Inventor: **Wollensak, John Charles**
**666 Weybridge**
**Bloomfield Hills, Michigan 48013 (US)**

(74) Representative: **Bizley, Richard Edward et al,**
**BOULT, WADE & TENNANT 27 Furnival street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 020 138 B1

Courier Press, Leamington Spa, England

N-(2-amino-3-ethyl-alpha-methylbenzylidene)-2,6-diethylaniline and its preparation; antioxidant additive mixtures including said compound; the use of said compound, said additive mixtures and certain alkylated anilines as antioxidants for organic materials; and organic materials afforded antioxidant protection as aforesaid

This invention relates to a new amine antioxidant compound and to antioxidant additive mixtures. The invention is in the field of antioxidants for organic materials, more particularly it is concerned with organic materials susceptible to deterioration by oxidation but containing small amounts of one or more new antioxidants in proportions providing resistance to oxidation.

Aromatic amines, for example, N-phenyl-$\alpha$-naphthyl-amine or diphenylamine, have heretofore been known to provide an antioxidant effect in organic substances. U.S. Patent Specification No. 3217040 describes a process for the production of N-alkylated or N,N-dialkylated aromatic amines. The products are stated to have a wide variety of uses and may be suitable as inhibitors which retard oxidative deterioration of various organic materials. U.S. Patent Specification No. 2662815 describes certain substituted nitrosodiphenylamines which are useful as oxidation inhibitors. U.S. Patent Specification No. 398044 describes a process for increasing the electron sensitivity of silver halide photographic emulsions which comprises adding certain substituted aromatic amines to silver halide photographic emulsions comprising finely-divided silver halide crystals. Amongst the disclosed amines for this purpose is the compound:

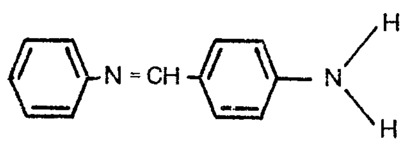

The present invention provides a new compound, N-(2-amino-3-ethyl-$\alpha$-methylbenzylidene)-2,6-diethylaniline, which has antioxidant activity in protecting organic materials susceptible to deterioration by oxidation. For convenience, this compound is sometimes referred to herein as "DEA dimer".

The invention further provides an additive mixture adapted for use as an antioxidant for organic material normally subject to degradation in the presence of oxygen, which mixture comprises N-(2-amino-3-ethyl-$\alpha$-methylbenzylidene)-2,6-diethylaniline together with at least one compound of the formula

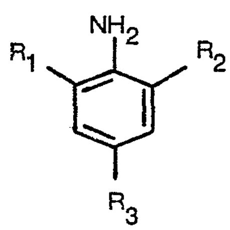

wherein $R_1$ and $R_2$ are each independently ethyl or butyl and $R_3$ is hydrogen, ethyl or butyl and/or a monoethyldiphenylamine.

The invention also includes the antioxidant use of the said novel compound or additive mixtures (or the separate ingredients thereof).

The invention therefore comprises an organic material normally susceptible to degradation in the presence of oxygen, but containing an antioxidant amount of the compound N-(2-amino-3-ethyl-$\alpha$-methylbenzylidene)-2,6-diethylaniline. Another form of the invention is such an oxidation susceptible organic substrate having a stabilizing amount of the above-noted new compound in admixture with a compound or compounds selected from the group:—

(a) compounds having the structure

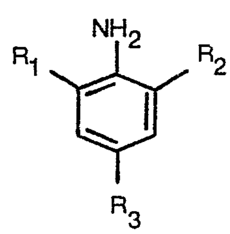

wherein $R_1$ and $R_2$ are each independently ethyl or butyl and $R_3$ is hydrogen, ethyl or butyl, and

(b) monoethyldiphenylamines.

The new compound noted as "DEA dimer" is suitable for use alone, or in admixture with either or both of the other-noted types of components (a) and (b).

The compound N-(2-amino-3-ethyl-$\alpha$-methylbenzylidene)-2,6-diethylaniline ("DEA dimer") has the structure:

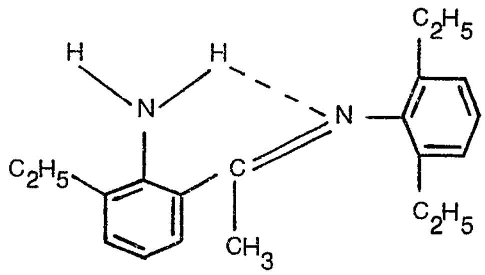

Representative examples of compounds designated in the (a) category include:

2,4,6-triethylaniline,
2-*sec*-butyl-6-ethylaniline,
2,6-diethyl-4-*sec*-butylaniline and
2,4-diethyl-6-*sec*-butylaniline.

Compounds included in the (b) designation can be any of the several positional isomers of monoethyldiphenylamine.
Examples of these are:

N-(2-ethylphenyl)aniline,
N-(3-ethylphenyl)aniline and
N-(4-ethylphenyl)aniline.

The invention also includes a process for preparing N-(2-amino-3-ethyl-$\alpha$-methylbenzylidene)-2,6-diethylaniline, which process comprises reacting aniline with ethylene at a temperature of 200° to 400°C in the presence of an aluminum anilide catalyst which has been formed by adding an alkyl or aryl aluminum halide to the aniline, subjecting the resulting mixture to an aqueous wash so as to remove the catalyst, distilling off aniline and ortho-ethyl anilines from the resulting washed mixture and separating N-(2-amino-3-ethyl-$\alpha$-methylbenzylidene)-2,6-diethylaniline from the resulting distillation residue. Thus, a preferred manner of obtaining the antioxidant compounds which have utility in the present invention is to conduct an alkylation reaction whereby aniline is reacted with ethylene according to the procedure set forth in U.S. Patent Specification No. 3923892. Accordingly, aniline may be placed in autoclave under nitrogen and diethyl aluminum chloride added to it to give it an aniline:aluminum mole ratio of about 7—25:1. The autoclave is sealed and heated to about 100° to 150°C. to form the catalyst. The autoclave is carefully vented, then sealed and heated to about 200° to 300°C. and pressurized with ethylene to about 33—137 bars (500 to 2000 psig). It is maintained under ethylene pressure at about 200° to 400°C. until 2,6-diethylaniline production is optimized. This takes about 2 to 8 hours.

Following the alkylation, the resulting reaction mixture may be washed with aqueous caustic to remove the catalyst. Unreacted aniline, 2-ethylaniline and 2,6-diethylaniline are then distilled off leaving a residual product. This residual product consists mainly of

| | |
|---|---|
| 2,4,6-triethylaniline | 5—20 weight percent |
| diethyl-*sec*-butylaniline (2 isomers) | 1—10 weight percent |
| 2-*sec*-butyl-6-ethylaniline | 20—40 weight percent |
| diphenylamine | 1—10 weight percent |
| monoethyldiphenylamine (2 isomers) | 10—20 weight percent |
| N-(2-amino-3-ethyl-$\alpha$-methylbenzylidene)-2,6-diethylaniline | 15—35 weight percent |

The product is preferably (and simply) used in this form as an antioxidant. Optionally the individual compounds may be separated by methods such as fractionation, chromatography and the like to obtain

the individual compounds or fractions that are enriched in the individual compounds.

The following Procedure illustrates the preferred manner of obtaining the antioxidant compounds.

Procedure

In an autoclave place 200 grams of aniline. Flush with nitrogen and heat to about 90°C. and add 15 grams of diethyl aluminum chloride. Seal and stir about 5 minutes. Vent the autoclave to atmospheric pressure. Seal and heat to about 275°C. and continue stirring while pressurizing to about 68 bars (1000 psig) with ethylene. Continue ethylene feed to maintain about 1000 psig at about 320°C. After 3 hours cool and vent the autoclave. Wash the reaction product with aqueous caustic to remove catalyst. Transfer the product to a distillation vessel and distill to remove first aniline, next *o*-ethylaniline and then 2,6-diethylaniline. Bottoms temperature reaches about 290°C. during this distillation. Cool the residual material to obtain an oily product, a typical analysis being

| | |
|---|---|
| 2,4,6-triethylaniline | 10.1 percent |
| diethyl-*sec*-butylaniline | 3.6 percent[1] |
| 2-*sec*-butyl-6-ethylaniline | 22.1 percent |
| diphenylamine | 5.1 percent |
| monoethyldiphenylamine | 16.3 percent[2] |
| N-(2-amino-3-ethyl-$\alpha$-methylbenzylidene)-2,6-diethylaniline | 28.3 percent |

[1] 2 isomers
[2] 2 isomers

This mixture can be used as such as an antioxidant since it has excellent antioxidant properties. Optionally, it may be fractionated into its separate components. Such a residual product was distilled under vacuum giving the following main fractions:

| | Approximate Boiling Point | mm Hg Abs. |
|---|---|---|
| 2,4,6-triethylaniline | 150°C. | 20 |
| 2-*sec*-butyl-6-ethylaniline | 150°C. | 20 |
| diethyl-*sec*-butylaniline | 155°C. | 10 |
| diphenylamine[1] | 160°C. | 1.5 |
| monoethyldephenylamine | 184°C. | 1.5 |
| N-(2-amino-3-ethyl-$\alpha$-methylbenzylidene)-2,6-diethylaniline | 172°C. | 0.5 |

[1]. diphenylamine is a known antioxidant and its use other than in the present combinations is not part of this invention.

The present antioxidants can be used in a broad range of organic materials normally subject to gradual degradation in the presence of oxygen during use over an extended period. In other words, the organic materials or compositions protected by the present antioxidants are of the type in which the art recognizes the need for antioxidant protection and to which an antioxidant of soem type is customarily added to obtain an extended service life. The oxidative degradation protected against is the slow gradual deterioration of the organic material or composition rather than, for example, combustion. In other words, the present antioxidants are not flame-retarding additives nor flame-suppressing additives and the degradation protected against is not combustion but, rather, the gradual deterioration of the organic composition due to the effects of oxygen over an extended period of time.

Examples of organic materials in which the present antioxidants are useful include polymers, both homopolymers and copolymers, of olefinically unsaturated monomers, for example, polyolefins such as polyethylene, polypropylene, polybutadiene, and the like. Also poly-halohydrocarbons such as polyvinyl chloride, polychloroprene, polyvinylidene chloride, polyfluoro olefins and the like, are afforded

stabilization. The antioxidants provide antioxidant protection in natural and synthetic rubbers such as copolymers of olefinically unsaturated monomers including styrenebutadiene rubber (SBR rubber), ethylene-propylene copolymers, ethylene-propylenediene terpolymers such as the terpolymer of ethylene, propylene and cyclopentadiene or 14,-cyclo-octadiene. Polybutadiene rubbers such as cis-polybutadiene rubber are protected. Poly-2-chloro-1,3-butadiene (neoprene) and poly-2-methyl-1,3-butadiene (isoprene rubber) are stabilized by the present antioxidants. Likewise, acrylonitrile-butadienestyrene (ABS) resins are effectively stabilized. Ethylenevinyl acetate copolymers are protected as are butene-methylacrylate copolymers. Nitrogen-containing polymers such as polyurethanes, nitrile rubber, and lauryl acrylate-vinyl-pyrrolidone copolymers are effectively stabilized. Adhesive compositions such as solutions of polychloroprene (neoprene) in toluene are protected.

Petroleum oils such as solvent-refined, midcontinent lubricating oil and Gulfcoast lubricating oils are effectively stabilized. In hydrocarbon lubricating oils, both mineral and synthetic, the present antioxidants are particularly effective when used in combination with a zinc dihydrocarbyldithiophosphate, e.g. zinc dialkyldithiophosphate or zinc di-alkaryldithiophosphate.

Synthetic ester lubricants such as those used in turbine and turbojet engines are given a high degree of stabilization. Typical synthetic ester lubricants include di-2-ethylhexyl sebacate, trimethylolpropane tripelargonate, $C_{5-9}$ aliphatic monocarboxylic esters of pentaerythritol, complex esters formed by condensing under esterifying conditions, mixtures of polyols, polycarboxylic acids, and aliphatic monocarboxylic acids and/monohydricalkanols. An example of these complex esters is the condensation product formed from adipic acid, ethyleneglycol and a mixture of $C_{5-9}$ aliphatic acids. Plasticizers such as dioctyl phthalate are effectively protected. Heavy petroleum fractions such as tar and asphalt can also be protected should the need arise.

Polyamides such as adipic acid-1,6-diaminohexane condensates and poly-6-aminohexanoic acid (nylon) are effectively stabilized. Polyalkylene oxides such as copolymers of phenol with ethylene oxide or propylene oxide are stabilized. Polyphenyl ethers such as poly-2,6-dimethylphenyl ether formed by polymerization of 2,6-dimethylphenol using a copper-pyridine catalyst are stabilized. Polycarbonate plastics and other polyformaldehydes are also protected.

Linear polyesters such as phthalic anhydride-glycol condensates are given a high degree of protection. Other polyesters such as trimellitic acid-glycerol condensates are also protected. Polyacrylates such as polymethylacrylate and polymethylmethacrylate are effectively stabilized. Polyacrylonitriles and copolymers of acrylonitriles with other olefinically unsaturated monomers such as methylmethacrylates are also effectively stabilized.

The antioxidants can be used to protect any of the many organic substrates to which an antioxidant is normally added. Such use can be where economics permit to protect such substrates as asphalt, paper, fluorocarbons such as teflon, polyvinyl acetate, polyvinylidene chloride, coumarone-indene resins, polyvinyl ethers, polyvinylidene bromide, polyvinyl bromide, acrylonitrile, vinyl bromide copolymer, vinyl butyral resins, silicones such as dimethylsilicone lubricants, phosphate lubricants such as tricresylphosphate, and the like.

The antioxidants are incorporated into the organic substrate in a small but effective amount so as to provide the required antioxidant protection. A useful range is from about 0.005 to about 10 weight percent, and a preferred range is from about 0.05 to 5 weight percent.

Methods of incorporating the antioxidants into the substrate are well known. For example, if the substrate is liquid, the antioxidants can merely be mixed into the substrate. Frequently, the organic substrate is in solution and the antioxidants are added to the solution and the solvent removed. Solid organic substrates can merely be sprayed with solutions of the antioxidants in volatile solvents, for example, the stabilized grain products result from spraying the grain with toluene solutions of the present antioxidants. In the case of rubbery polymers the antioxidants can be added following the polymerization stage by mixing them with the final emulsion or solution polymerization mixture and then coagulating or removing solvent to recover the stabilized polymer. They can also be added at the compounding stage merely by mixing with the rubbery polymer in commercial mixing equipment such as a Banbury blender. In this manner, rubbery polymers such as styrene-butadiene rubber, cispolybutadiene or isoprene polymers are blended with an antioxidant together with the other ingredients normally added such as carbon black, oil, sulfur, zinc oxide, stearic acid, vulcanization accelerators, and the like. Following mastication, the resultant mixture is fabricated and molded into a finished form and vulcanized.

The following Example serves to illustrate the present invention.

## Example

To a synthetic rubber master batch comprising 100 parts of SBR rubber having an average molecular weight of 60,000, 50 parts of mixed zinc propionate stearate, 50 parts carbon black, 5 parts road tar, 2 parts sulfur and 1.5 parts of mercapto benzothiazole is added 1.5 parts of the residual product from the foregoing Procedure. After mastication, the resultant master batch is cured for 60 minutes using 45 psi steam pressure, resulting in a stabilized SBR vulcanizate.

Tests were conducted which show the antioxidant effectiveness of the present antioxidants. In these tests mineral oil containing 50 ppm iron as ferric naphthenate and test material was placed in a

test cell. It was maintained at 150°C. and air was bubbled through it for 24 hours at the rate of 8 liters per hour. The amount of oxidative degradation was determined by measuring increase in viscosity and acid number. The following results were obtained in a 300 SUS mineral oil. The several values under each test are replicates.

| Additive | Conc. % | % Vis. Increase | | Acid No. | |
|---|---|---|---|---|---|
| none | — | 430, | 448 | 12.3, | 12.2 |
| | | 430, | 503 | 10.5, | 12.1 |
| aromatic amine mixture from the foregoing Procedure | 0.5 | 54, | 63 | 5.3, | 5.1 |
| ditto | 1.0 | 10, | 12 | 0.5, | 0.7 |
| "DEA dimer"[1] | 0.5 | 54, | 54 | 4.7 | 3.6 |
| ditto | 1.0 | 25, | 25 | 1.7, | 1.8 |

[1] N-(2-amino-3-ethyl-α-methylbenzylidene)-2,6-diethylaniline

The same test was conducted with 150 SUS mineral oil. The following results were obtained:

| Additive | Conc. % | % Vis. Increase | | Acid No. | |
|---|---|---|---|---|---|
| none | — | 268, | 330 | 9.7, | 10.5 |
| aromatic amine mixture from the foregoing Procedure | 0.5 | 9, | 6 | 0.4, | 0.5 |
| "DEA dimer" | 0.5 | 15, | 23 | 0.5, | 2.0 |

The above results show the antioxidant effectiveness of the present antioxidants.

**Claims**

1. N-(2-amino-3-ethyl-α-methylbenzylidene)-2,6-diethylaniline.

2. An additive mixture adapted for use as an antioxidant for organic material normally subject to degradation in the presence of oxygen characterised in that the mixture comprises N-(2-amino-3-ethyl-α-methylbenzylidene)-2,6-diethylaniline together with at least one compound of the formula:

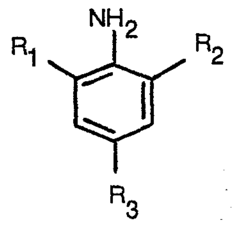

wherein $R_1$ and $R_2$ are each independently ethyl or butyl and $R_3$ is hydrogen, ethyl or butyl and/or a monoethyldiphenylamine.

3. An additive mixture as claimed in claim 2 further characterised in that it contains at least one of 2,4,6-triethylaniline, a diethyl-*sec*-butylaniline and 2-*sec*-butyl-6-ethylaniline.

4. An additive mixture as claimed in claim 2 or claim 3 further characterised in that it comprises diphenylamine.

5. A process for inhibiting or preventing oxidation of an organic material normally susceptible to degradation in the presence of oxygen characterised by incorporating in said material an antioxidant amount of N-(2-amino-3-ethyl-α-methylbenzylidene)-2,6-diethylaniline or of an additive mixture as defined in any one of claims 2 to 4 for the separate ingredients thereof).

6. A process for preparing N-(2-amino-3-ethyl-α-methylbenzylidene)-2,6-diethylaniline comprising reacting aniline with ethylene at a temperature of 200° to 400°C in the presence of an aluminum anilide catalyst which has been formed by adding an alkyl or aryl aluminum halide to the aniline, subjecting the resulting mixture to an aqueous wash so as to remove the catalyst, distilling off

aniline and ortho-ethyl anilines from the resulting washed mixture and separating N-(2-amino-3-ethyl-$\alpha$-methylbenzylidene)-2,6-diethylaniline from the distillation residue remaining after distilling off aniline and ortho-ethyl anilines.

7. An organic material normally susceptible to degradation in the presence of oxygen, for example a lubricating oil or a liquid hydrocarbon fuel, characterized by a content of N-(2-amino-3-ethyl-$\alpha$-methylbenzylidene)-2,6-diethylaniline or of an additive mixture as defined in any one of claims 2 to 4 (or the separate ingredients thereof) in sufficient amount to inhibit or prevent said degradation.

**Revendications**

1. La N-(2-amino-3-éthyl-$\alpha$-méthylbenzylidène)-2,6-diéthylaniline.

2. Mélange d'additifs conçu pour être utilisé comme antioxydant pour une matière organique normalement exposée à la dégradation en présence d'oxygène, caractérisé en ce que le mélange comprend de la N-(2-amino-3-éthyl-$\alpha$-méthylbenzylidène)-2,6-diéthylaniline en association avec au moins un composé de formule:

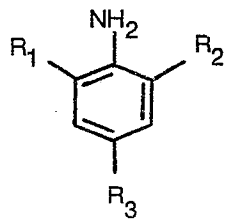

dans laquelle $R_1$ et $R_2$ représentent chacun, indépendamment, un groupe éthyle ou butyle et $R_3$ est l'hydrogène, un groupe éthyle ou butyle, et ou une mono-éthyldiphénylamine.

3. Mélange d'additifs suivant la revendication 2, caractérisé en outre en ce qu'il contient au moins l'un des composés tels que la 2,4,6-triéthylaniline, une diéthyl-*sec.*-butylaniline et la 2-*sec.*-butyl-6-éthylaniline.

4. Mélange d'additifs suivant la revendication 2 ou la revendication 3, caractérisé en outre en ce qu'il contient également de la diphénylamine.

5. Procédé pour inhiber ou prévenir l'oxydation d'une matière organique normalement exposée à la dégradation en présence d'oxygène, caractérisé par l'incorporation à ladite matière d'une quantité antioxydante de N-(2-amino-3-éthyl-$\alpha$-méthylbenzylidène)-2,6-diéthylaniline ou d'un mélange d'additifs tel que défini dans l'une quelconque des revendications 2 à 4 (ou les ingrédients séparés de ce mélange).

6. Procédé de préparation de la N-(2-amino-3-éthyl-$\alpha$-méthylbenzylidène)-2,6-diéthylaniline, caractérisé en ce qu'il consiste à faire réagir de l'aniline avec de l'éthylène à une température de 200 à 400°C en présence d'un catalyseur consistant en un composé d'aluminium d'anilide qui a été formé par addition d'unhalogénure d'alkyl- ou d'arylaluminium à l'aniline, l'exposition du mélange résultant à un lavage aqueux de manière à éliminer le catalyseur, l'élimination par distillation de l'aniline et des orthoéthylanilines du mélange lavé résultant et la séparation de la N-(2-amino-3-éthyl-$\alpha$-méthylbenzylidène)-2,6-diéthylaniline du résidu de distillation qui reste après que l'aniline et des orthoéthylanilines ont été chassées par distillation.

7. Matière organique normalement exposée à la dégradation en présence d'oxygène, par exemple huile lubrifiante ou carburant hydrocarboné liquide, caractérisé par une teneur en N-(2-amino-3-éthyl-$\alpha$-méthylbenzylidène)-2,6-diéthylaniline ou en un mélange d'additifs tel que défini dans l'une quelconque des revendications 2 à 4 (ou les ingrédients séparés de ce mélange) en quantité suffisante pour inhiber ou prévenir ladite dégradation.

**Patentansprüche**

1. N-(2-Amino-3-äthyl-$\alpha$-methylbenzyliden)-2,6-diäthylanilin.

2. Additiv-Gemisch zur Verwendung als Antioxidationsmittel für organisches Material, welches normalerweise einem Abbau in Gegenwart von Sauerstoff unterliegt, dadurch gekennzeichnet, daß das Gemisch N-(2-Amino-3-äthyl-$\alpha$-methylbenzyliden)-2,6-diäthylanilin zusammen mit mindestens einer Verbindung der Formel

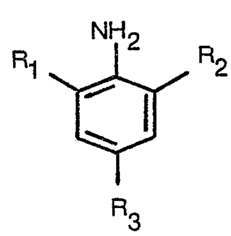

worin $R_1$ und $R_2$ jeweils unabhängig voneinander eine Äthyl- oder Butylgruppe darstellen und $R_3$ ein Wasserstoffatom, eine Äthyl- oder Butylgruppe bedeutet, und/oder ein Monoäthyldiphenylamin enthält.

3. Additiv-Gemisch nach Anspruch 2, dadurch gekennzeichnet, daß es mindestens eine der Verbindungen 2,4,6-Triäthylanilin, Diäthyl-sek.-butylanilin und 2-sek.-Butyl-6-äthylanilin enthält.

4. Additiv-Gemisch nach Anspruch 2 oder Anspruch 3, dadurch gekennzeichnet, daß es auch Diphenylamin enthält.

5. Verfahren zur Inhibierung oder Verhinderung der Oxidation eines organischen Materials, welches normalerweise empfindlich gegenüber einem Abbau in Gegenwart von Sauerstoff ist, dadurch gekennzeichnet, daß in das Material eine Antioxidationsmenge an N-(2-Amino-3-äthyl-$\alpha$-methylbenzyliden)-2,6-diäthylanilin oder eines Additiv-Gemisches nach einem der Ansprüche 2 bis 4 (oder dessen getrennte Bestandteile) eingemischt wird.

6. Verfahren zur Herstellung von N-(2-Amino-3-äthyl-$\alpha$-methylbenzyliden)-2,6-diäthylanilin, dadurch gekennzeichnet, daß Anilin mit Äthylen bei einer Temperatur von 200° bis 400°C in Gegenwart eines Aluminiumanilid-Katalysators, der durch Zugabe eines Alkyl- oder Arylaluminiumhalogenids zum Anilin gebildet worden ist, umgesetzt wird, das erhaltene Gemisch zur Entfernung des Katalysators mit Wasser gewaschen wird, Anilin und Ortho- Athylaniline aus dem erhaltenen gewaschenen Gemisch abdestilliert werden und das N-(2-Amino-3-äthyl-$\alpha$-methylbenzyliden)-2,6-diäthylanilin von dem Destillationsrückstand, der nach der Destillation von Anilin und Ortho-Äthylanilinen verbleibt, abgetrennt wird.

7. Organisches Material, welches normalerweise gegenüber einem Abbau in Gegenwart von Sauerstoff empfindlich ist, beispielsweise ein Schmieröl oder ein flüssiger Kohlenwasserstoff-Treibstoff, gekennzeichnet durch einen Gehalt an N-(2-Amino-3-äthyl-$\alpha$-methylbenzyliden)-2,6-diäthylanilin oder an einem Additiv-Gemisch nach einem der Ansprüche 2 is 4 (oder dessen getrennte Bestandteile) in einer zur Inhibition oder Verhinderung des Abbaus hinreichenden Menge.